# EUROPEAN PATENT APPLICATION

(11) **EP 4 539 001 A1**
(43) Date of publication of application: **16.04.2025**
(21) Application number: 24203708.3
(22) Date of filing: 30.09.2024
(51) Int. Cl.: G07B 15/06, G06Q 20/14, H04W 4/021, G06Q 30/0283, G07B 15/02, G08G 1/01

(54) **METHOD AND SYSTEM FOR GNSS TOLLING WITH DYNAMIC TOLL ADJUSTMENT USING IN-VEHICLE DATA**

(30) Priority: 02.10.2023 US 202318375928
(71) Applicant: VM Consolidated, Inc., Mesa, AZ 85201 (US)
(72) Inventor: Chinn, Cathi, Mesa, 85201 (US); Young, Stephen, Mesa, 85201 (US)
(74) Representative: Optimus Patents Limited

(57) **Abstract**

A system, method, and apparatus are provided for dynamically managing toll charges for a vehicle which transmits one or more messages to a backend server of a toll service with vehicle location data and toll-related data collected from a memory storage device or one or more in-vehicle sensors which capture the toll-related data relating to the vehicle operation and design so that the backend server of the toll service can calculate one or more adjustments to a toll charge rate for the vehicle based on the toll-related data in the second message.

## Description

### BACKGROUND OF THE INVENTION

### Field of the Invention

The present disclosure is directed in general to the field of vehicle tolling systems. In one aspect, the present disclosure relates to an apparatus, system and method for dynamically tracking and calculating toll charges for vehicle usage of tollways.

### Description of the Related Art

To access toll roads, vehicle drivers pay toll charges that can vary, depending on various factors relating to the type of vehicle, its operation, its location, or other toll-related information, including but not limited to the number of occupants, vehicle weight, number of axels, and the like. Conventional toll management systems have used roadside equipment to monitor vehicles on a toll road, such as by using cameras or other sensors, but such equipment is expensive to install, maintain, and use in terms of hardware, software, communications, and labor costs. In addition, when different regions or a toll road have different tolls, there are additional costs for installing roadside monitoring equipment in multiple different locations. Other toll management systems seek to reduce these costs by providing cell phone applications which are used to provide toll-related information that is input by the phone user/vehicle driver, such as by taking a picture to show the number of passengers in a vehicle. However, such cell phone apps can be spoofed and/or misused to provide misleading information to the tolling authority. Another drawback with cell phone data input is that the vehicle driver can be distracted from driving when interacting with the mobile phone or device, thereby creating safety hazards and/or violations of hands-free driving laws. As seen from the foregoing, the existing solutions for quickly and efficiently collecting toll-related information from vehicles travelling on a toll road are extremely difficult at a practical level by virtue of the challenges with correctly and accurately tracking toll-related information for a vehicle with real time and reliable tolling data.

### BRIEF DESCRIPTION OF THE DRAWINGS

The present disclosure may be understood, and its numerous objects, features and advantages obtained, when the following detailed description of a preferred embodiment is considered in conjunction with the following drawings.
Figure 1 depicts a system block diagram of a tolling region having geofences which enable efficient registration and dynamically adjusted tolling charges using in-vehicle data sensors in accordance with selected embodiments of the present disclosure.
Figure 2 depicts data processing system components of a vehicle and a toll management system which are communicatively coupled to dynamically track and adjust toll charges for the vehicle in accordance with selected embodiments of the present disclosure.
Figure 3 depicts a simplified flow chart showing the logic for a toll management system which dynamically adjusts tolling charges by using in-vehicle data sensors to extract toll-related data in accordance with selected embodiments of the present disclosure.

### DETAILED DESCRIPTION

An apparatus, system, architecture, methodology, and program code are described for a vehicle toll management system which employs in-vehicle data extracted from vehicle storage and one or more in-vehicle sensors, including a global navigation satellite system, to dynamically track and adjust toll charges for the vehicle. In selected embodiments, a vehicle is connected and configured with an in-vehicle application that communicates over a vehicle network with in-vehicle sensors or databases to track, extract, or collect toll-related information, such as vehicle type, design, operation, and location parameters, including but not limited to number of occupants, vehicle weight, number of axels, use of high occupancy vehicle lane, and the like. In addition, each vehicle may be connected and configured to communicate with a toll management server system to provide and receive data associated with tolling criteria and charges relating to the location of the vehicle. In support of such communication functions, the in-vehicle application may be configured to continuously monitor the vehicle location and other in-vehicle sensor data readings, and to provide such information to the toll management server system which calculates any toll charges or adjustments in a real-time and transparent manner without requiring a vehicle operator to lose focus on driving the vehicle.

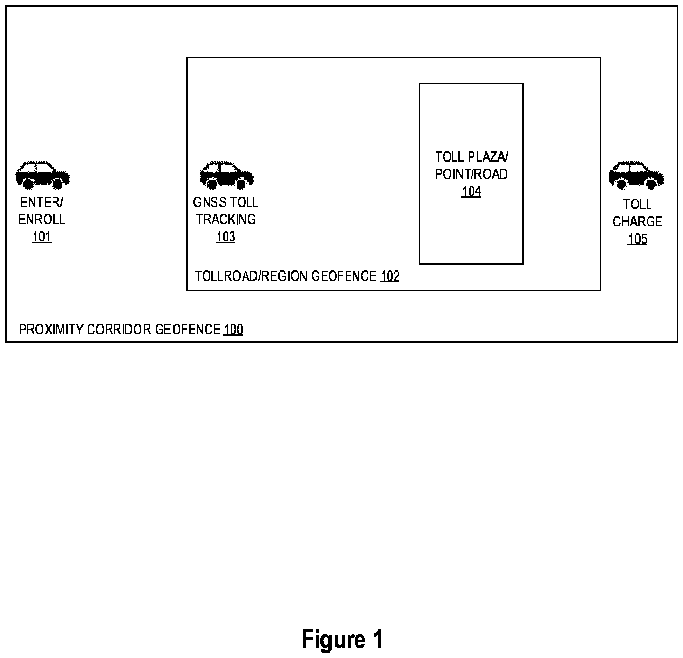

To provide additional details for an improved understanding of selected embodiments of the present disclosure, reference is now made to Figure 1 which depicts a system block diagram of a tolling region having geofences which enable efficient vehicle registration and dynamic adjustment of tolling charges using in-vehicle data sensors. Generally speaking, a geofence is a virtual fence or perimeter that is positioned around a physical location that is a region of interest (e.g., toll road(s), congestion region(s), corridors, etc.). Similar to a real fence, a geofence virtually delineates the location or region of interest from the area surrounding it, and can have any shape, including having one or more polygons that are virtually superimposed on a map or area. In addition, a geofence can also detect movement inside the virtual boundary. In accordance with the present disclosure, the geofences may be used to delineate the location of one or more toll roads in a particular geographic area (e.g., city, county, state) that are managed by a toll authority which collects tolls for vehicle use of the toll roads, and the amount of toll charge can vary, depending on a variety of parameters. For example, there can be lower rates charged for vehicles that are pre-registered with the toll authority, and higher rates for vehicles that are not registered. In addition, different toll rates can apply to vehicles with a minimum number of passengers, or with vehicles exceeding a defined axel count, or with vehicles over a weight threshold, or with vehicles which are towing a trailer, etc. In addition, different toll rates may be charged for vehicles driving in high-occupancy tolling lanes, or in designated congestion areas, or in environmentally sensitive areas.

To facilitate efficient registration of a vehicle, the toll management system may virtually demarcate the physical boundaries of the geographic area(s) managed by the toll authority with a proximity corridor geofence 100 that surrounds a set of one or more toll roads associated with the toll authority. For example, the Central Texas Regional Mobility Authority is the toll authority for central Texas and a proximity corridor geofence 100 associated with CTRMA would include SH 130, SH 45, Mopac 1 Toll, 183A, etc. In addition, there could be North Texas Tollway Authority (NTTA) which would have a corridor geofence 100 that encompasses all their toll roads. Within each tolling authority's corridor geofence 100, individual toll road or region geofences 102 would be positioned around individual toll roads 104. The toll road geofence 102 is virtually defined to encompass a particular toll road in the corridor geofence (e.g., Texas 130 would have a toll road geofence that is distinct from Texas 183A's toll road geofence). A region geofence, on the other hand, can correspond to a special tolling area. For example, if a city downtown area were a congestion zone subject to tolling, then a region geofence can be defined to encompass that area. Within the toll road/region geofence 102, one or more toll areas (e.g., toll plaza or point or area or road) 104 can be located which are managed and defined by the toll authority (along with non-toll roads).

The function of the proximity corridor geofence 100 is to enable the identification of any unregistered vehicle as it approaches the tollroad/region geofence 102 in order to facilitate real-time enrollment of the vehicle while it is moving through the proximity corridor geofence 100. For example, a vehicle 101 that has entered the proximity corridor geofence 100 may be configured to detect that it is within the proximity corridor geofence area and to automatically enroll the vehicle with the toll management system 1 or otherwise verify a current enrollment status of that vehicle with the toll authority associated with the toll network. In the event that a vehicle's enrollment query to the toll management system 1 indicates that that the vehicle registration is not active, the vehicle 101 may be configured to provide an in-vehicle notification to the vehicle operator providing an opportunity to register the vehicle. On an affirmative selection, the vehicle is dynamically registered with the agency through, for example, an API interface. Upon entering the tollroad/region geofence 102, a registered vehicle 103 may employ global navigation satellite system (GNSS) toll tracking for any toll charges incurred when the vehicle enters a toll area/plaza/point/road 104. In addition, the registered vehicle 13 may also employ one or more in-vehicle sensors to dynamically track and adjust toll charges for the vehicle's journey. To this end, the registered vehicle 103 may be configured with an in-vehicle application that communicates over a vehicle network with in-vehicle sensors or databases to track, extract, or collect toll-related information, such as vehicle type, operation, location parameters, and the like. In addition, each registered vehicle 103 may be connected and configured to communicate over a network with a toll management server system to provide and receive data associated with tolling criteria and charges relating to the location of the vehicle103.

Upon leaving the tollroad/region geofence 102 or at any time the vehicle is assessed a toll charge withing the tollroad/region geofence 102, each registered vehicle 105 may be provided with toll charge information to notify the vehicle operator with real time, transparent information on each toll charge accrued while travelling in a toll area/plaza/point/road 104 within toll road/region geofence 102.

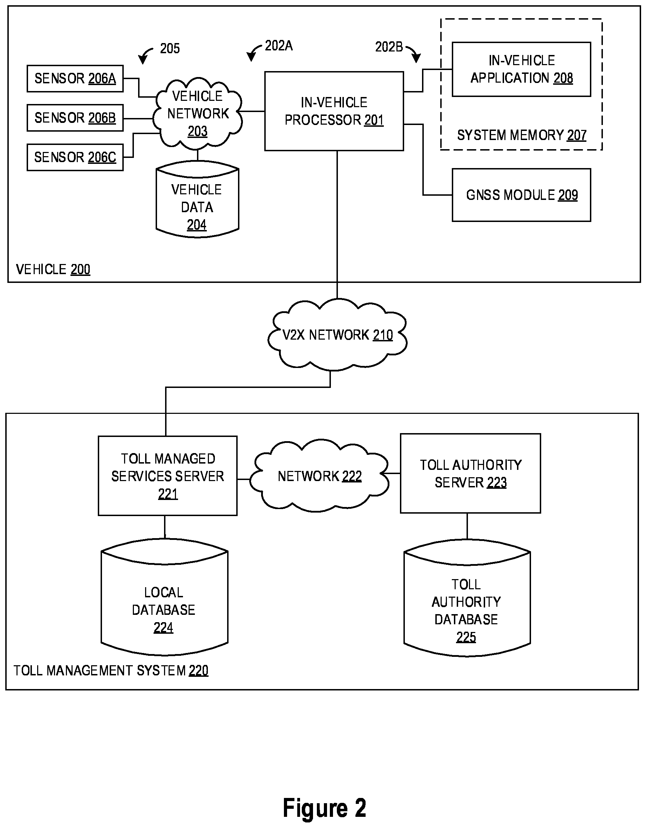

To provide additional details for an improved understanding of selected embodiments of the present disclosure, reference is now made to Figure 2 which depicts data processing system components 2 of a vehicle 200 and a toll management system 220 which are communicatively coupled to dynamically track and adjust toll charges for the vehicle. As disclosed herein, the method and system for performing GNSS tolling with dynamic toll adjustment using in-vehicle data may be implemented entirely in selected hardware, entirely in software (including firmware, resident software, micro-code, etc.) or in embodiments combining software and hardware aspects that may all generally be referred to herein as a "circuit," "module" or "system." Certain implementations may incorporate all, fewer, or greater than the components described herein.

The depicted data processing system components in the vehicle 200 include one or more in-vehicle processor units 201 that are coupled, respectively, over one or more system bus connectors 202A, 202B to a vehicle network 203, system memory 207, and a GNSS module 209, thereby forming an automotive vehicle network. The processor unit(s) 201 can have various architectures, such as a system on a chip (SOC), electronic control unit (ECU), general-purpose processor, multiprocessor, custom compute accelerator, FPGA, hard-wired ASIC, etc. In other embodiments, the vehicle processor unit 206 may be embodied with processor/transceiver that is part of the vehicle (e.g., infotainment system), or a processor/transceiver that is within the vehicle (e.g., a mobile phone that has access to the CAN sensors or a dongle attached to the OBDII port).

Through the vehicle network 203, the processor unit(s) 201 are coupled over one or more in-vehicle network (IVN) bus connectors 205 to one or more sensors 206A-C and a vehicle data storage device 204. Examples of IVN bus connectors 205 include, but are not limited to, Controller Area Network (CAN) bus, CAN with Flexible Data-Rate (CAN FD) bus, CAN data link layer protocol (CAN XL) bus, Local Interconnect Networks (LIN) bus, FlexRay bus, Ethernet-based network buses, and other types. For example, a CAN bus is a message-based communications bus protocol that is often used within automobiles to enable communications between various electronic control units (ECUs) which perform various control applications, such as for airbags, antilock brakes, cruise control, electric power steering, audio systems, windows, doors, mirror adjustment, battery and recharging systems for hybrid/electric cars, and many more. The CAN bus protocol is used to enable communications between the various bus devices.

As disclosed herein, the sensor(s) 206 may be connected and configured to monitor, track, extract, or collect toll-related information which can be used for calculation of the toll charges for the vehicle. Example sensor data includes, but is not limited to vehicle location, vehicle occupancy, towing status, fuel type, miles driven, vehicle weight, number of axels, use of high occupancy vehicle lane, and the like. For example, a first sensor 206A may be a camera which detects the lane where a vehicle is travelling, or detects if a trailer is attached to the vehicle, or detects the number of passengers in a vehicle. In addition, a second sensor 206B may be one or more seatbelt sensors or airbag sensors which detect how many passengers are sitting in the vehicle. In addition, a third sensor 206C may be a weight or suspension sensor which detects the vehicle occupancy, towing status, etc. In addition or in the alternative, the sensor(s) 206 may include one or more short and long range radar, camera or lidar sensors.

As disclosed herein, vehicle data storage device 204 may be connected and configured to store unique vehicle identification information (e.g., VIN, vehicle operator name, vehicle license plate number, and the like) or other toll-related information (e.g., vehicle type, chassis type, vehicle ID, vehicle design, vehicle weight, number of axels, low emission engine type, etc.). For example, the vehicle data storage device 204 may include information specifying if the vehicle is an electric or internal combustion or low emission vehicle. In addition, the vehicle data storage device 204 may store data identifying one or more proximity corridor geofence areas or tollroad/region geofence areas which are used to evaluate a current location of the vehicle in relation to the geofence area(s). In addition, the vehicle data storage device 204 may store a digital wallet identifier (e.g., Google Pay or Apple Pay or an OEM associated payments system) for automated billing associated with tolls incurred by the vehicle within the corridor geofence.

In accordance with selected embodiments of the present disclosure, the vehicle 200 includes a vehicle location sensor, such as a global navigation satellite system (GNSS) module 209 (e.g., GPS, Galileo, BeiDou, or QZSS) which includes circuitry to perform geolocation functionality. There might be mapping information in the system memory 207, or that could be part of the in-vehicle application 208.

In accordance with selected embodiments of the present disclosure, the vehicle 200 includes a system memory 207 that is populated with data or programming code, including but not limited to operating system (OS) and software programs and any other applications executed by the in-vehicle processor unit(s) 206 for the vehicle 200. In particular, the software programs stored in system memory 207 may include an in-vehicle application 208. The in-vehicle application 208 can, for example, take the form of embedded software running on an infotainment processor of the vehicle 200 that is coupled to a display viewable by a vehicle operator or another processing device that has access to data from the vehicle sensors 206 or data from the data storage device 204. In addition, the in-vehicle application 208 has access to location data generated by the GNSS module 209 to specify a geographic location of the vehicle 200.

In selected embodiments, the in-vehicle application 208 employs the GNSS module 209 or one or more in-vehicle sensors 206 to monitor the location of the vehicle 200 on the toll road and to provide toll-related data to the toll management system 220 associated with toll criteria in that location for purposes of dynamically tracking and adjusting toll charges for the vehicle 200 based on toll-related information that is tracked, extracted, or collected from the sensors 206.

In selected embodiments, dynamic toll tracking may require information that is external to the vehicle 200. To this end, the in-vehicle application 208 may be connected and configured to communicate over a vehicle-to-everything (V2X) network 210 with the toll management system 220 that has access to a local database 224 storing information identifying registered users of the toll authority. As will be appreciated, the V2X network 210 may be implemented with other networks, such as a vehicle-to-infrastructure (V2I) network or a vehicle-to-network (V2N) or Vehicle to Connected Vehicle Network (V2CVN). To this end, the toll management system 220 may include a backend toll managed services server (TMSS) 221 that communicates not only with the local database 224, but also communicates over network 222 with a toll authority server 223 that stores identification of all registered users of the toll authority in a toll authority database 225.

Once connected over the V2X network 210, the in-vehicle application 208 can provide geographic location information to the TMSS 221 in order to determine whether the vehicle 200 is currently traveling along a toll road. This may be done by comparing the geographic location for the vehicle 200 with toll road geofences defined at the TMSS 221. Alternatively, the toll road geofence data can be stored in memory accessible to the in-vehicle application (e.g., database 204) and the determination of whether the vehicle is currently traveling along a toll road can be made by the in-vehicle application 208.

In selected embodiments for determining whether the vehicle 200 is currently traveling along a toll road, the in-vehicle application 208 is configured to periodically provide the geographic location information from the GNSS module 209 to the TMSS 221. The information provided to the TMSS 221 can include a unique vehicle identifier associated with the vehicle (e.g., VIN) and information associated with the geographic location coordinates. The TMSS 221 can then establish whether the vehicle's geographic location corresponds with a toll road. In addition, the TMSS 221 can use the vehicle unique identifier to determine whether the vehicle is registered on the TMSS by performing a lookup on a local database 224. The unique identifier can also be used to perform a reverse lookup for another identifier with which the local database 224 is indexed (e.g., vehicle operator name, vehicle license plate number, and the like). In the event that the TMSS 221 does not have the vehicle in the local database 224, the TMSS 221 can communicate over a network 222 with a toll authority server to request a search for the vehicle 200 on a toll authority database 225. If the toll authority has the vehicle 200 registered, the TMSS 221 can use information from the toll authority server 223 to have the toll managed services server 221 add a registration entry in the local database 224.

If the TMSS 221 determines that the vehicle 200 is traveling on a toll road, the TMSS 221 can provide a message to the in-vehicle application 208 that the vehicle 200 is on the toll road, and can request additional toll-related information be provided by the vehicle 200. In addition, the TMSS 221 can request that geographic location information be provided more frequently by the in-vehicle application 208. Alternatively, the in-vehicle application 208 can be configured to respond to the request by automatically increasing the frequency of location reporting to the TMSS 221. In either case, the in-vehicle application 208 can provide geographic location information at a higher periodicity to improve accuracy during the time that the vehicle 200 is traversing the toll road.

In addition to providing location information, the in-vehicle application 208 can be configured to provide the other toll-related information to the TMSS 221. Such toll-related information includes, but is not limited to, information relating to the vehicle type, engine type, operation, design, use, occupancy, towing status, axle count, and the like. The in-vehicle application 208 accesses the toll-related information via the in-vehicle network coupled to the sensors 206, data storage 204, and the in-vehicle processor 201 executing the in-vehicle application 208. As disclosed herein, the toll-related information can be provided by every subsequent message to the TMSS 221 until the vehicle 200 is determined to exit the toll area of the toll road.

Based on the location or toll-related information provided from the vehicle 200, the TMSS 221 can dynamically calculate and adjust the toll rate associated with the toll road as appropriate. For example, if the toll road is designated for high occupancy tolling (HOT), then any passenger-count from the toll-related information can be used to determine whether the vehicle qualifies for HOT rates while travelling on the toll road. Alternatively, if a certain lane on the toll road is designated as a toll lane, then the TMSS 221 can charge the appropriate toll based on data extracted from external camera data which indicates whether the vehicle 200 is in the toll lane or another lane on the road.

While the vehicle 200 travels along a toll road or in a tolled area, information associated with toll costs can be provided by the TMSS 221 to the in-vehicle application 208 for display to the vehicle operator for toll transparency. Once the TMSS 221 determines that the vehicle 200 is no longer driving on the toll road or in the tolled area, a message can be provided to the in-vehicle application 208 to reduce the frequency of geographic location reporting and to eliminate further transmission of toll-related information. The reduced messaging frequency to the TMSS 221 releases transmission bandwidth for other applications and in-vehicle network bandwidth.

The data processing system components 201-209, 221-225 depicted in the vehicle 200 and the toll management system 220 are not intended to be exhaustive, but rather are representative to highlight components that can be implemented by the present disclosure. For instance, the data processing system components may include alternate memory storage devices. In addition, multiple in-vehicle processor devices may be used to run the in-vehicle application 208 and a separate vehicle infotainment system. And though not shown, it will be appreciated that the in-vehicle processor unit(s) may be coupled over audio/video adapter modules to input/output devices, including but not limited to one or more display screens or audio input/output devices associated with a vehicle infotainment system. These and other variations are intended to be within the spirit, scope and intent of the present disclosure.

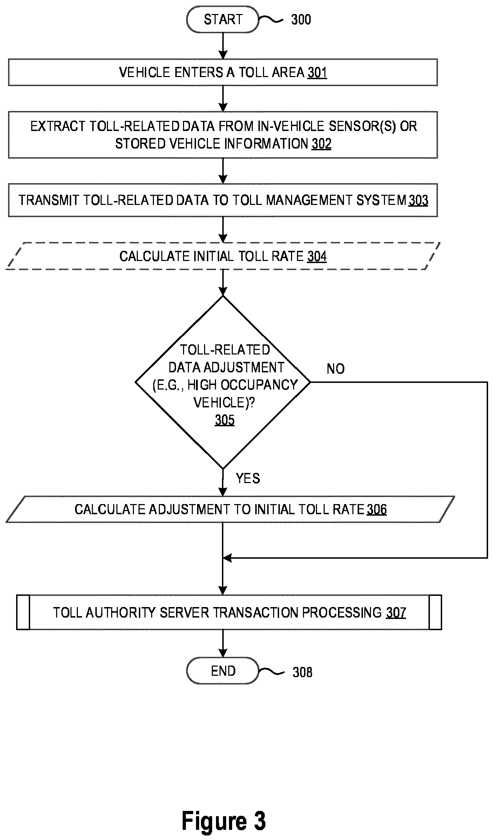

To provide additional details for an improved understanding of selected embodiments of the present disclosure, reference is now made to Figure 3 which depicts a simplified flow chart 3 showing the logic for a toll management system which dynamically adjusts tolling charges by using in-vehicle data sensors to extract toll-related data. In an example embodiment, the control logic and methodology shown in Figure 3 may be implemented in whole or in part with hardware or software on an electronic control unit (ECU), microcontroller unit, or digital system processor that includes processor and memory for storing programming control code for controlling the operation of a vehicle which is communication with a toll management system.

An embodiment of a method for dynamically adjusting tolling charges using in-vehicle data sensors and geographic location information may include steps 300-307 shown in the general order of Figure 3, though the method may include more or fewer steps or can arrange the order of the steps differently than those shown. Generally, the method starts with a start operation 300 and ends with step 308 after processing steps 301-307 which are executed as a set of computer-executable instructions by one or more computer systems or processors and encoded or stored in one or more memories which include a computer readable medium. In other configurations, the method may be executed by a series of components, circuits, and gates created in a hardware device, such as a System of Chip (SOC), Application Specific Integrated Circuit (ASIC), or a Field Programmable Gate Array (FPGA). In other configurations, the method may be executed as an iterative loop where the processing steps 301-307 are periodically repeated on a predetermined schedule or on certain triggering events or when prompted by a vehicle driver.

Once the vehicle drive system starts and is operational at step 300, the vehicle's on-board sensors are activated to collect sensor data reflecting the vehicle operation, status, location, or other toll-related information. In selected embodiments, the sensor data signals may be provided by vehicle's on-board sensors 206A-C and GNSS module 209 to the system processor 201 which runs the in-vehicle application 208 and GNSS module 209.

At step 301, the vehicle enters a toll facility or area. In selected embodiments, the vehicle detects that it has entered a toll facility (e.g., 104) by using an in-vehicle application or location mapping service (e.g., 208) to monitor the location of the vehicle in relation to one or more toll road geofence areas (e.g., 102).

At step 302, the vehicle begins monitoring, tracking, extracting, or collecting toll-related data from the vehicle's on-board sensor(s) and/or stored vehicle information. Examples of extracted toll-related data include vehicle type, operation, and location parameters. For example, one or more in-vehicle sensors (e.g., 206A-C) can extract information relating to the number of vehicle occupants, vehicle location, vehicle usage of a high occupancy vehicle lane, vehicle towing of a trailer, and the like. Toll-related data may also be extracted from vehicle information stored at the vehicle database (e.g., 204), such as a VIN number which can be used to identify the vehicle weight, vehicle axle count, vehicle type (e.g., electric or internal combustion or low emission vehicle, and the like.

At step 303, the vehicle transmits the toll-related data to the toll management system. In selected embodiments, the vehicle (e.g., 200) periodically transmits extracted toll-related data, along with location data, over the V2X network (e.g., 210) to the backend toll managed services server (e.g., 221) at the toll management system 220.

At step 304, an initial toll rate may be calculated. In selected embodiments, the toll rate is calculated by the backend toll managed services server (e.g., 221) based on data specifying the location of the vehicle that was provided by the vehicle to the TMSS. For example, the backend toll managed services server 221 may calculate an initial toll rate that is applied to the vehicle 200 for accessing the toll facility or area, where the toll rate may be applied to a subsequently computed mileage or distance travelled by the vehicle in the toll area. As indicated with the dashed lines around block 302, the calculation of the initial toll rate may be omitted at this point in the process and performed when calculating the adjusted toll rate at step 306.

At step 305, it is determined if any toll-related data adjustments are required. In selected embodiments, the backend toll managed services server (e.g., 221) at the toll management system 200 assesses the toll-related data and location data for the vehicle to determine if a toll rate adjustment to the initial toll rate is required. If the toll-related data does not indicate that an adjustment is required (negative outcome to detection step 305), then the toll authority server 223 performs transaction processing at step 307 to issue a toll charge based on the initial toll rate without adjustment. This can occur, for example, if the toll-related data extracted from the in-vehicle sensors 206 indicates that the vehicle 200 did not qualify for a toll rate reduction, such as by travelling in the single passenger -occupancy vehicle lanes or carrying a single passenger. However, if the toll-related data indicates that an adjustment is required (affirmative outcome to detection step 305), then the toll authority server 223 may apply a toll rate adjustment at step 306. This can occur, for example, if the toll-related data extracted from the in-vehicle sensors 206 indicates that the vehicle 200 did qualify for a toll rate reduction, such as by travelling in the high-occupancy vehicle lane or carrying multiple passengers. Other examples of toll rate adjustments at step 306 can include increasing the toll rate if the extracted toll-related data indicates that the vehicle is towing a trailer or exceeding a weight limit or exceeding a maximum axle count or driving in a congestion area or environmentally sensitive area. In addition, the toll rate adjustments at step 306 can include decreasing the toll rate if the extracted toll-related data indicates that the vehicle is driving in a high occupancy vehicle lane or weighing less than a predetermined weight limit.

As disclosed herein, the dynamic adjustment of tolling charges may start by calculating an initial toll charge or rate as the vehicle enters the toll area, but it will be appreciated that the toll charge adjustment may also be implemented without requiring the computation of an initial toll charge or rate that is subsequently adjusted based on the collected toll-related data. For example, toll management system may compute a first toll charge or rate that the toll-related data indicates is appropriate for the location and the configuration of the vehicle, and then as the vehicle moves along the toll road or region, any changes to the toll-related data (e.g., as indicated by in-vehicle sensor data which shows that the vehicle is driving in an high-occupancy vehicle lane) prompt the toll management system to adjust or change the first toll charge or rate.

At step 307, the toll authority server processes the toll-related transaction to bill the vehicle operator for use of the toll road facility. In selected embodiments, the transaction processing may include transmitting information associated with toll costs from the backend toll managed services server (e.g., 207) to the in-vehicle application (e.g., 208) for display to the vehicle operator, including a description of any toll-related charge adjustment, thereby reducing the distraction caused to the vehicle operator and making the toll calculation process transparent to the vehicle operator. Additional toll-related transaction processing may include providing a message to the in-vehicle application (e.g., 208) to reduce the frequency of geographic location reporting and to eliminate further transmission of toll-related information. Toll-related transaction processing may also include sending the vehicle's toll transaction information to the tolling authority.

By now it should be appreciated that there has been provided an apparatus, method, program code, and system for dynamically managing toll charges for a vehicle. In the disclosed method, the vehicle transmits a first message to a toll managed services server (TMSS) with location data indicating the vehicle has entered a toll area defined by a geofence. In selected embodiments, the vehicle processor identifies the location data by accessing a global navigation satellite system (GNSS) sensor coupled to the vehicle processor. In selected embodiments, the vehicle transmits the first message wirelessly to the TMSS, such as by using a vehicle-to-everything (V2X) network. In addition, a tolling application program executing on the vehicle processor collects toll-related data for the vehicle while operating on the toll area by accessing one or more in-vehicle sensors and an in-vehicle data storage device. In selected embodiments, toll-related data for the vehicle is collected by accessing an in-vehicle camera sensor to detect if the vehicle is driving in a high occupancy vehicle lane. In other selected embodiments, toll-related data for the vehicle is collected by accessing an in-vehicle sensor (e.g., a camera or electrical hookup) to detect if the vehicle is towing a trailer. In other selected embodiments, toll-related data for the vehicle is collected by accessing an in-vehicle camera sensor or seatbelt sensor to detect a number of vehicle passengers. In other selected embodiments, toll-related data for the vehicle is collected by accessing the in-vehicle data storage device at the vehicle to determine a weight measure of the vehicle or an axel count for the vehicle. In addition, the vehicle transmits a second message with the toll-related data to the TMSS includes the toll-related data. In addition, the vehicle processor receives a third message from the TMSS which includes a toll charge for viewing by an operator of the vehicle, where the toll charge is computed based on the toll-related data. In selected embodiments, the toll charge in the third message is calculated based on one or more adjustments to an initial toll charge, where the initial toll charge is calculated for the vehicle to use the toll area based on the location data in the first message. In such embodiments, the toll charge may be calculated by reducing an initial toll charge if the location data and the toll-related data indicates that the vehicle is properly driving in a high-occupancy lane. In other such embodiments, the toll charge may be calculated by increasing an initial toll charge if the location data and the toll-related data indicate that the vehicle is not driving in a high-occupancy lane. In other such embodiments, the toll charge may be calculated by increasing an initial toll charge if the toll-related data indicates that the vehicle exceeds a maximum weight measure or axel count. In other such embodiments, the toll charge may be calculated by increasing the initial toll charge if the toll-related data indicates that the vehicle is towing a trailer. In selected embodiments, the vehicle processor is an embedded infotainment processor in the vehicle. In such embodiments, the embedded infotainment processor may be configured to display the toll charge on an infotainment display monitor in the vehicle.

In another form, there has been provided an apparatus, method, program code, and system for dynamically managing toll charges in a vehicle toll management system. In the disclosed method, a toll managed services server (TMSS) receives a first message from a vehicle with location data indicating the vehicle has entered onto a toll area associated with the TMSS. In addition, the TMSS calculates a toll charge for the vehicle to use the toll area based on the location data in the first message. In addition, the TMSS receives one or more second messages from the vehicle with toll-related data collected by the vehicle while operating in the toll area by accessing one or more in-vehicle sensors and an in-vehicle data storage device. In selected embodiments, the toll-related data collected by the vehicle indicates if the vehicle is driving in a high occupancy vehicle lane, or if the vehicle is towing a trailer, or if the number of vehicle passengers exceeds a predetermined number of passengers, or if the vehicle exceeds a weight limit or axel count limit, or if the vehicle is a low-emission vehicle. In selected embodiments, the TMSS receives the first message and the one or more second messages over a wireless network, such as a vehicle-to-everything (V2X) network, connecting the vehicle to the TMSS. In addition, the TMSS transmits a third message to the vehicle with the toll charge for viewing by an operator of the vehicle. In selected embodiments, the TMSS calculates an adjusted toll charge based on the toll-related data contained in the one or more second messages. In such embodiments, the adjusted toll charge may be calculated by reducing an initial toll charge if the location data and the toll-related data indicates that the vehicle is properly driving in a high-occupancy lane. In other such embodiments, the adjusted toll charge may be calculated by increasing an initial toll charge if the location data and the toll-related data indicate that the vehicle is not driving in a high-occupancy lane. In other such embodiments, the adjusted toll charge may be calculated by increasing an initial toll charge if the toll-related data indicates that the vehicle exceeds a maximum weight measure or axel count. In other such embodiments, the adjusted toll charge may be calculated by increasing an initial toll charge if the toll-related data indicates that the vehicle is towing a trailer.

In yet another form, there has been provided a vehicle toll management system, apparatus, method, and program code, for dynamically managing toll charges. The disclosed vehicle toll management system includes a vehicle having a processor connected over an in-vehicle network to retrieve in-vehicle data from a vehicle data storage and one or more in-vehicle sensors. The disclosed vehicle is wirelessly coupled to communicate with a toll authority computer that is operable to dynamically adjust tolling charges using in-vehicle data accessed from the vehicle data storage and one or more in-vehicle sensors. As disclosed, the vehicle processor transmits location data accessed by an in-vehicle location sensor indicating the vehicle has entered onto a toll area associated with the toll authority computer. In addition, the vehicle processor transmits toll-related data for the vehicle while operating in the toll area by accessing the data storage and one or more in-vehicle sensors. In addition, the vehicle processor receives, from the toll authority computer, a toll charge for the vehicle to use the toll area that is calculated based on the toll-related data transmitted by the vehicle processor, where the vehicle processor displays the toll charge for viewing by an operator of the vehicle. In selected embodiments, the toll charge is calculated by adjusting an initial toll charge based on the toll-related data, where adjusting the toll charge may include decreasing the initial toll charge if the toll-related data indicates the vehicle is driving in a high occupancy vehicle lane. In other embodiments, the initial toll charge may be adjusted by increasing the initial toll charge if the toll-related data indicates the vehicle is towing a trailer. In other embodiments, the initial toll charge may be adjusted by decreasing the initial toll charge if the toll-related data indicates the vehicle has a number of vehicle passengers which exceeds a predetermined number of passengers. In other embodiments, the initial toll charge may be adjusted by increasing the initial toll charge if the toll-related data indicates the vehicle exceeds a weight limit or axel count limit. In other embodiments, the initial toll charge may be adjusted by decreasing the initial toll charge if the toll-related data indicates the vehicle is a low-emission vehicle.

Although the described exemplary embodiments disclosed herein focus on a toll management system which can be used with a V2X-enabled vehicle to dynamically compute toll charges based on toll-related data that is captured with in-vehicle sensors and/or data storage, the present disclosure is not necessarily limited to the example embodiments illustrate herein and may be applied to any toll charging system. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the spirit and scope of the invention as defined by the appended claims so that those skilled in the art should understand that they can make various changes, substitutions and alterations without departing from the spirit and scope of the invention in its broadest form.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for dynamically managing toll charges for a vehicle, comprising:
transmitting, by a vehicle processor, a first message to a remote toll managed services server (TMSS) comprising location data indicating the vehicle has entered a toll area defined by a geofence;
collecting, by a tolling application program executing on the vehicle processor, toll-related data for the vehicle while operating in the toll area by accessing one or more in-vehicle sensors and an in-vehicle data storage device;
transmitting, by the vehicle processor, a second message to the TMSS comprising the toll-related data; and
receiving, at the vehicle processor, a third message from the TMSS comprising a toll charge for viewing by an operator of the vehicle, where the toll charge is based on the toll-related data.

2. The method of claim 1, wherein the vehicle processor transmits the first message wirelessly to the TMSS.

3. The method of claim 1, where collecting toll-related data for the vehicle comprises accessing an in-vehicle camera sensor to detect if the vehicle is driving in a high occupancy vehicle lane.

4. The method of claim 1, where collecting toll-related data for the vehicle comprises accessing an in-vehicle sensor to detect if the vehicle is towing a trailer.

5. The method of claim 1, where collecting toll-related data for the vehicle comprises accessing an in-vehicle camera sensor or seatbelt sensor to detect a number of vehicle passengers.

6. The method of claim 1, where collecting toll-related data comprises collecting toll-related data for the vehicle while operating in the toll area by accessing the in-vehicle data storage device at the vehicle to determine a weight of the vehicle or an axel count for the vehicle.

7. The method of claim 1, where the vehicle processor identifies the location data by accessing a global navigation satellite system (GNSS) sensor coupled to the vehicle processor.

8. The method of claim 1, where the toll charge in the third message is calculated based on one or more adjustments to an initial toll charge, where the initial toll charge is calculated for the vehicle to use the toll area based on the location data in the first message.

9. The method of claim 8, where the toll charge is calculated by reducing the initial toll charge if the location data and the toll-related data indicates that the vehicle is properly driving in a high-occupancy lane.

10. The method of claim 8, where the toll charge is calculated by increasing the initial toll charge if the location data and the toll-related data indicate that the vehicle is not driving in a high-occupancy lane.

11. A method for dynamically managing toll charges in a vehicle toll management system, comprising:
receiving, by a toll managed services server (TMSS), a first message from a vehicle with location data indicating the vehicle has entered onto a toll area associated with the TMSS;
calculating, by the TMSS, a toll charge for the vehicle to use the toll area based on the location data in the first message;
receiving, by the TMSS, one or more second messages from the vehicle with toll-related data collected by the vehicle while operating in the toll area by accessing one or more in-vehicle sensors and an in-vehicle data storage device;
transmitting, by the TMSS, a third message to the vehicle with the toll charge for viewing by an operator of the vehicle.

12. The method of claim 11, wherein the TMSS receives the first message and the one or more second messages over a wireless network connecting the vehicle to the TMSS.

13. The method of claim 11, further comprising calculating, by the TMSS, an adjusted toll charge based on the toll-related data contained in the one or more second messages, where the toll-related data collected by the vehicle indicates if the vehicle is driving in a high occupancy vehicle lane, or if the vehicle is towing a trailer, or if the number of vehicle passengers exceeds a predetermined number of passengers, or if the vehicle exceeds a weight limit or axel count limit, or if the vehicle is a low-emission vehicle.

14. A vehicle toll management system, comprising:
a vehicle comprising a processor connected over an in-vehicle network to retrieve in-vehicle data from a vehicle data storage and one or more in-vehicle sensors, where the vehicle is wirelessly coupled to communicate with a toll authority computer that is operable to dynamically adjust tolling charges using in-vehicle data accessed from the vehicle data storage and one or more in-vehicle sensors,
wherein the vehicle processor transmits location data accessed by an in-vehicle location sensor indicating the vehicle has entered onto a toll area associated with the toll authority computer and also transmits toll-related data for the vehicle while operating in the toll area by accessing the data storage and one or more in-vehicle sensors, and
wherein the vehicle processor receives, from the toll authority computer, a toll charge for the vehicle to use the toll area that is calculated based on the toll-related data transmitted by the vehicle processor, where the vehicle processor displays the toll charge for viewing by an operator of the vehicle.

15. The vehicle toll management system of claim 14, wherein the toll charge is calculated by adjusting an initial toll charge based on the toll-related data, where adjusting the initial toll charge comprises:
decreasing the initial toll charge if the toll-related data indicates the vehicle is driving in a high occupancy vehicle lane,
increasing the initial toll charge if the toll-related data indicates the vehicle is towing a trailer,
decreasing the initial toll charge if the toll-related data indicates the vehicle has a number of vehicle passengers which exceeds a predetermined number of passengers,
increasing the initial toll charge if the toll-related data indicates the vehicle exceeds a weight limit or axel count limit, or
decreasing the initial toll charge if the toll-related data indicates the vehicle is a low-emission vehicle.
